Europäisches Patentamt

European Patent Office

Office européen des brevets

(11) Veröffentlichungsnummer : **0 397 187 B1**

(12) **EUROPÄISCHE PATENTSCHRIFT**

(45) Veröffentlichungstag der Patentschrift :
**12.08.92 Patentblatt 92/33**

(21) Anmeldenummer : **90108898.9**

(22) Anmeldetag : **11.05.90**

(51) Int. Cl.$^5$ : **B23H 7/04**

(54) **Stromzuführungsvorrichtung für eine Elektroerosionsmaschine.**

(30) Priorität : **12.05.89 DE 3915614**

(43) Veröffentlichungstag der Anmeldung :
**14.11.90 Patentblatt 90/46**

(45) Bekanntmachung des Hinweises auf die
Patenterteilung :
**12.08.92 Patentblatt 92/33**

(84) Benannte Vertragsstaaten :
**CH DE FR GB IT LI LU SE**

(56) Entgegenhaltungen :
**US-A- 4 263 116**

(56) Entgegenhaltungen :
**PATENT ABSTRACTS OF JAPAN, unexamined
applications, M Sektion, Band 10, Nr. 81, 29.
März 1986 THE PATENT OFFICE JAPANESE-
GOVERNMENT
PATENT ABSTRACTS OF JAPAN, unexamined
applications, M Sektion, Band 10, Nr. 372, 11.
Dezember 1986 THE PATENT OFFICE JAPA-
NESEGOVERNMENT**

(73) Patentinhaber : **AG für industrielle Elektronik
AGIE Losone bei Locarno
CH-6616 Losone/Locarno (CH)**

(72) Erfinder : **Wehrli, Peter, Ing. ETH
CH-6611 Auressio (CH)**

(74) Vertreter : **EGLI-EUROPEAN PATENT
ATTORNEYS
Widenmayerstrasse 5
W-8000 München 22 (DE)**

## Beschreibung

Die vorliegende Erfindung betrifft eine Stromzuführungsvorrichtung für eine Elektroerosionsmaschine zum Übertragen eines Erosionsstromes mittels wenigstens eines Kontaktteiles auf einen durchlaufenden Erosionsdraht, mit einer Kontaktdruckvorrichtung zum Andrücken des Erosionsdrahtes gegen das Kontaktteil, gemäß dem Oberbegriff des Patentanspruchs 1.

Bei den üblichen Elektroerosionsmaschinen läuft ein Erosionsdraht von einer Vorratsrolle über eine Ablenkrolle durch einen Arbeitsspalt im Werkstück und wird an einer weiteren Ablenkrolle zu einer Aufnahmerolle für den Erosionsdraht umgelenkt. Zwischen den beiden Ablenkrollen ist wenigstens ein Kontaktteil angeordnet, das einen schleifenden Gleitkontakt zum Übertragen des Erosionsstromes auf den Erosionsdraht darstellt. Zur Übertragung des Erosionsstromes, der hohe Stromimpulswerte hat, mittels des Kontakteiles auf den Erosionsdraht bedarf es einer Anlagekraft des Erosionsdrahtes gegen das Kontaktteil, um den für die Stromübertragung erforderlichen Kontaktdruck zu gewährleisten. Dieser Kontaktdruck wird bei einer bekannten Stromzuführungsvorrichtung für eine Elektroerosionsmaschine dadurch erzeugt, daß die Kontaktteile derart angeordnet sind, daß der über die Kontaktteile laufende Erosionsdraht durch diese aus der Lage abgelenkt wird, die sich allein durch das gespannte Führen des Erosionsdrahtes über die beiden Ablenkrollen bei Abwesenheit der Kontaktteile ergeben würde. Wenn man bei der bekannten Stromzuführungsvorrichtung die dem Erosionsdraht zugeführten Ströme erhöhen möchte, so bedarf es hierzu einer Erhöhung des Kontaktdruckes, und somit einer verstärkten Auslenkung des Erosionsdrahtes. Der zulässigen Auslenkung des Erosionsdrahtes sind jedoch gewisse Grenzen dadurch gesetzt, daß ein automatisches Einfädeln des Erosionsdrahtes nur bis zu einer gewissen Auslenkung vorgenommen werden kann, daß der nötige Platzbedarf für die Stromzuführungsvorrichtung ansteigt, und daß Probleme der Führungsgenauigkeit des Erosionsdrahtes auftreten.

Es sind zwar bereits beispielsweise aus der US-PS 4263116 Stromzuführungsvorrichtungen für Elektroerosionsmaschinen bekannt, bei denen das Erfordernis der verstärkten Erosionsdrahtauslenkung zum Erzeugen der nötigen Kontaktkraft vermieden wird, indem der Erosionsdraht zwischen zwei gegeneinander anliegenden rollenförmigen Kontaktteilen geführt wird. Bei einer derartigen Ausgestaltung der Kontaktteile erzielt man jedoch nur vergleichsweise geringe Kontaktflächen zwischen dem rollenförmigen Kontaktteil und dem Erosionsdraht, wodurch der übertragbaren Stromstärke entsprechende Grenzen gesetzt sind.

Aus der JP-A-56-16008 ist es bereits bekannt, den Erosionsdraht einer Elektroerosionsmaschine mit einem Magnetfeld zu beaufschlagen, um den Erosionsdraht vibrieren zu lassen, was zu einer Beseitigung von Bearbeitungsrückständen und von Gasbestandteilen im Arbeitsspalt des Werkstückes führen soll.

Aus der JP-A-56-14408 ist es bereits bekannt, bei einer Elektroerosionsmaschine eine oberhalb oder unterhalb des Arbeitsspaltes angeordnete Magnetfelderzeugungsvorrichtung vorzusehen, die ein senkrecht zur Laufrichtung der Drahtelektrode laufendes Magnetfeld erzeugt. Dieses Magnetfeld wird ebenso wie bei der zuletzt gewürdigten Druckschrift dazu verwendet, eine Vibration der Drahtelektrode zu bewirken, die zum Beseitigen von Luftblasen oder Partikelrückständen aus dem Bearbeitungsspalt dienen soll.

Aus der JP-A-60-221220 ist es bereits bekannt, eine Justierung der Führung des Erosionsdrahtes einer Elektroerosionsmaschine mittels elektrischer, magnetischer oder mit Wärme arbeitender Positionierungselemente für eine geringfügige Lageverschiebung des Erosionsdrahtes vorzunehmen.

Aus der JP-A-61-109617 ist es bereits bekannt, bei einer Elektroerosionsmaschine Koaxial zum Erosionsdraht einen ringförmigen Elektromagneten anzuordnen. Dieser Elektromagnet dient jedoch zum Festhalten des Werkstückes mittels Magnetkraft während der Werkstückbearbeitung.

Aus der JP-A-61-164727 ist es bekannt, ein Lager für die Führung des Erosionsdrahtes aus zwei mittels Magnetkraft zueinander hingezogenen Führungsteilen zu bilden, die an den Erosionsdraht von drei Seiten anliegen und somit eine im wesentlichen gleichförmige Einklemmkraft für die Führung des Erosionsdrahtes unabhängig von geringfügigen Dickenschwankungen desselben zu erzeugen.

Gegenüber diesem Stand der Technik liegt der vorliegenden Erfindung die Aufgabe zugrunde, eine Stromzuführungsvorrichtung für eine Elektroerosionsmaschine der eingangs genannten Art so weiterzubilden, daß mit dieser auch hohe Erosionsströme auf den Erosionsdraht übertragbar sind.

Diese Aufgabe wird erfindungsgemäß durch eine Stromzuführungsvorrichtung nach dem Oberbegriff des Patentanspruchs 1 mit dem im kennzeichnenden Teil des Patentanspruchs 1 angegebenen Merkmal gelöst.

Der Erfindung liegt die Erkenntnis zugrunde, daß die Erzeugung der nötigen Kontaktdruckkraft besonders vorteilhaft dadurch bewerkstelligt werden kann, daß der Erosionsdraht im Bereich des Kontaktteiles mit einem Magnetfeld beaufschlagt wird, so daß der Erosionsstrom zusammen mit dem Magnetfeld eine Biot-Savart-Kraft bewirkt, durch die der Erosionsdraht gegen das Kontaktteil angepreßt wird. Da diese senkrecht auf dem Magnetfeld und auf der Stromflußrichtung stehende Anpreßkraft proportional zur Stärke des Erosionsstromes ist, der den Erosionsdraht durchfließt, liegt eine hohe Kontaktkraft immer dann vor, wenn sie zum Übertragen hoher Erosionsstromstärken erforderlich ist.

Vorzugsweise ist die Magnetfelderzeugungsvorrichtung, wie dies in Anspruch 2 festgelegt ist, derart angeordnet, daß sich das Magnetfeld senkrecht zum Erosionsdraht erstreckt, da lediglich die senkrecht zum Erosionsdraht verlaufende Magnetfeldkomponente zur Erzeugung der Biot-Savart-Kraft beiträgt.

Eine besonders hohe Anlagekraft ohne unerwünschte Auslenkung des Erosionsdrahtes außerhalb des Kontaktteiles wird gemäß Anspruch 3 dadurch erzielt, daß die Magnetfelderzeugungsvorrichtung so ausgebildet ist, daß die Abmessung des von ihr erzeugten Magnetfeldes in Richtung des Erosionsdrahtes im wesentlichen der Anlagelänge des Erosionsdrahtes an dem Kontaktteil entspricht.

Zu einer besonders hohen Feldstärke im Bereich des Erosionsdrahtes und somit zu einer hohen Anlagekraft an dem Kontaktteil gelangt man in vorteilhafter Weise gemäß Anspruch 4 dadurch, daß die Magnetfelderzeugunsvorrichtung ein Magnetfeld mit einer Abmessung in Richtung senkrecht zum Kontaktteil erzeugt, die einer bis mehreren Erosionsdrahtdicken entspricht. Grundsätzlich ist es wünschenswert, daß das Magnetfeld möglichst vollständig vom Erosionsdraht durchsetzt wird, da ein den Erosionsdraht nicht durchsetzender Teil des Magnetfeldes nicht zur Erzeugung der Biot-Savart-Kraft beitragen kann.

Eine besonders einfache Ausgestaltung der Magnetfelderzeugungsvorrichtung ergibt sich gemäß Anspruch 5 dadurch, daß diese durch einen Permanentmagneten gebildet wird.

Zweckmäßigerweise hat der Permanentmagnet gemäß Anspruch 6 zwei Polflächen, die sich in Richtung des Erosionsdrahtes erstrecken und von diesen sowie dem Kontaktteil mit einem verglichen mit ihrer Längserstreckung geringen Abstand beabstandet sind.

Vorzugsweise ist gemäß Anspruch 7 das Kontaktteil mit einer im wesentlichen ebenen Kontaktfläche versehen, und derart angeordnet, daß der Erosionsdraht durch das Kontaktteil nicht oder nur derart geringfügig ausgelenkt wird, daß die durch die geringfügige Auslenkung bewirkte Kontaktdruckkraft niedriger ist als die durch die Magnetfelderzeugungsvorrichtung erzeugbare Kontaktdruckkraft. Bei dieser Anordnung ist die Kontaktdruckkraft abgesehen von einer Anfangskraft, die auch bei fehlendem Erosionsstrom erforderlich ist, proportional zum Erosionsstrom.

Nachfolgend wird unter Bezugnahme auf die beiliegende Zeichnung eine bevorzugte Ausführungsform der Stromzuführungsvorrichtung gemäß der vorliegenden Erfindung näher erläutert. Es zeigen:

Fig. 1 eine skizzenhafte Darstellung einer Elektroerosionsmaschine mit einer Ausführungsform der erfindungsgemäßen Stromzuführungsvorrichtung; und

Fig. 2 eine Detailansicht der Stromzuführungsvorrichtung.

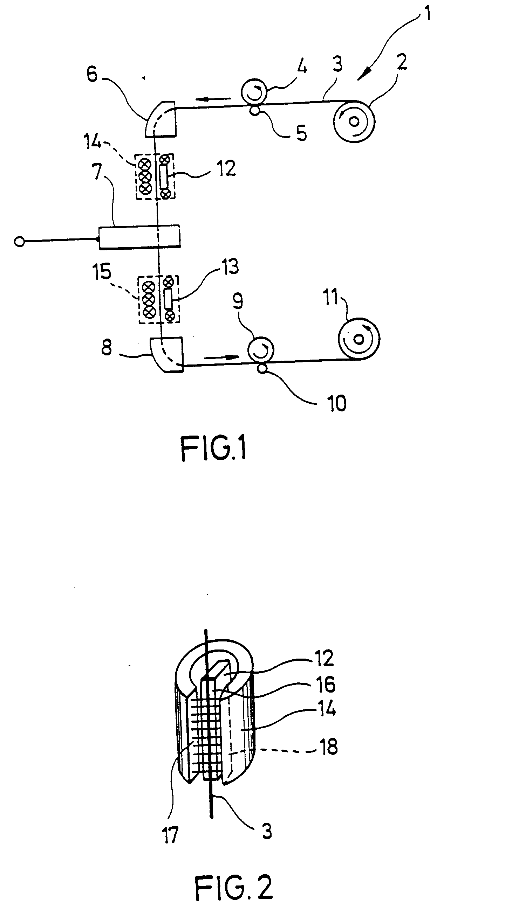

Wie in Fig. 1 zu sehen ist, umfaßt eine Elektroerosionsmaschine, die in ihrer Gesamtheit mit dem Bezugszeichen 1 bezeichnet ist, eine Vorratsrolle 2 eines Erosionsdrahtes 3,der über eine erste Förderrolle 4 mit Gegenrolle 5 einererersten Umlenk- und Führungsvorrichtung 6 zugeführt wird, einen Arbeitsspalt eines Werkstückes 7 durchläuft, an einer zweiten Umlenk- und Führungsvorrichtung 8 unterhalb des Werkstückes 7 erneut umgelenkt und geführt wird, bevor der Erosionsdraht 3 durch eine zweite Förderrolle 9 und einezweite Gegenrolle 10 einer Aufnahmerolle 11 für den Erosionsdraht 3 zugeführt wird.

Zwischen der ersten Umlenk- und Führungsvorrichtung 6 und dem Werkstück 7 bzw. zwischen dem Werkstück 7 und der zweiten Umlenk- und Führungsvorrichtung 8 liegt ein erstes bzw. zweites Kontaktteil 12, 13. Das erste und zweite Kontaktteil 12, 13 sind mit einem ersten Potential beaufschlagt, während das Werkstück 7 an einem zweiten Potential liegt, so daß es zu einem Erosionsstromfluß zwischen dem ersten Kontaktteil 12 und dem Werkstück 7 bzw. zwischen dem zweiten Kontaktteil 13 und dem Werkstück 7 kommt. Im Bereich des ersten Kontaktteiles 12 sowie im Bereich des zweiten Kontaktteiles 13 ist eine erste bzw. zweite Magnetfelderzeugungsvorrichtung 14, 15 angeordnet, die in der Fig. 1 nur schemenhaft durch strichpunktierte Umrisse angedeutet sind. Die Magnetfelderzeugungsvorrichtungen 14, 15 erzeugen Magnetfelder, die durch ihre Feldlinien in Fig. 1 angedeutet sind, welche sich senkrecht zur Laufrichtung des Erosionsdrahtes 3 sowie senkrecht zur normalen der Kontaktebene des ersten bzw. zweiten Kontaktteiles 12, 13 erstrecken.

Wie in Fig. 2 im einzelnen zu sehen ist, hat das erste Kontaktteil 12 eine gekrümmte oder im wesentlichen eben ausgestaltete Kontaktfläche 16, gegen die der Erosionsdraht 3 anliegt. Das Kontaktteil 12 wird von einer Magnetfelderzeugungsvorrichtung 14 umfaßt, die im wesentlichen hohlzylindrisch oder hufeisenförmig ausgebildet ist und eine in Achsrichtung des Hohlzylinders verlaufende Ausnehmung hat, die von einer Nordpolfläche 17 und einer Südpolfläche 18 eingefaßt wird.

Die Länge der Magnetfelderzeugungsvorrichtung 14 in Laufrichtung des Erosionsdrahtes 3 entspricht im wesentlichen der Länge des ersten Kontaktteiles 12 in dieser Richtung. Die radiale Tiefe der Polflächen 17, 18 beträgt vorzugsweise nur mehrere Erosionsdrahtdicken, um eine möglichst starke Konzentration des Magnetfeldes in dem Bereich zu bewirken, in dem der Erosionsdraht 3 zu liegen kommt.

Die Polflächen 17, 18 erstrecken sich in Laufrichtung des Erosionsdrahtes und sind von diesem gerade so weit beabstandet, daß es nicht zu einem Anliegen des Erosionsdrahtes 3 an den Polflächen 17, 18 während des Erosionsbetriebes kommt.

Abweichend von dem gezeigten Ausführungsbeispiel kann jedoch die erfindungsgemäße Stromzuführungsvorrichtung auch mit einem einzigen Kontaktteil mit zugeordneter Magnetfelderzeugungsvorrichtung ausgebildet werden.

In weiterer Abweichung von dem gezeigten Ausführungsbeispiel ist es möglich, die Magnetfelderzeugungsvorrichtung als Elektromagnet zu realisieren. Es ist denkbar, in diesem Fall den Elektromagneten mit dem Erosionsstrom oder mit einem vom Erosionsstrom unabhängigen Strom zu betreiben.

## Patentansprüche

1. Stromzuführungsvorrichtung für eine Elektroerosionsmaschine zum Übertragen eines Erosionsstromes mittels wenigstens eines Kontaktteiles (12, 13) auf einen durchlaufenden Erosionsdraht (3), mit einer Kontaktdruckvorrichtung zum Andrücken des Erosionsdrahtes (3) gegen das Kontaktteil (12, 13), dadurch gekennzeichnet, dass die Kontaktdruckvorrichtung durch eine Magnetfelderzeugungsvorrichtung (14, 15) gebildet ist, die so angeordnet ist, dass sich das erzeugte Magnetfeld senhrecht zum Erosionsdraht (3) erstrecht und die aus Stromfluss und Magnetfeld resultierende Kraft den Erosionsdraht gegen des Kontahtteil drücht.

2. Stromzuführungsvorrichtung nach Anspruch 1 oder 2, dadurch gekennzeichnet, daß die Magnetfelderzeugunsvorrichtung (14,15) derart ausgebildet ist, daß die Abmessung des von ihr erzeugten Magnetfeldes in Richtung des Erosionsdrahtes (3) im wesentlichen der Anlagelänge des Erosionsdrahtes (3) an dem Kontaktteil (12, 13) entspricht.

3. Stromzuführungsvorrichtung nach einem der Ansprüche 1 bis 3, dadurch gekennzeichnet, da die Magnetfelderzeugungsvorrichtung (14, 15) derart ausgebildet ist, daß die Abmessung des von ihr erzeugten Magnetfeldes in einer senkrecht auf dem Kontaktteil (14,15) stehenden Richtung einer bis mehreren Erosionsdrahtdicken entspricht.

4. Stromzuführungsvorrichtung nach einem der Ansprüche 1 bis 4, dadurch gekennzeichnet, da die Magnetfelderzeugungsvorrichtung (14, 15) durch einen Permanentmagneten gebildet wird.

5. Stromzuführungsvorrichtung nach Anspruch 5, dadurch gekennzeichnet, daß der Permanentmagnet (14, 15) zwei Polflächen (17, 18) aufweist, die sich in Richtung des Erosionsdrahtes (3) erstrecken und von diesem (3) sowie von dem Kontaktteil (12, 13) mit einem verglichen mit ihrer Längserstreckung geringen Abstand beabstandet sind.

6. Stromzuführungsvorrichtung nach einem der Ansprüche 1 bis 6, dadurch gekennzeichnet, da das Kontaktteil (12, 13) eine im wesentlichen ebene Kontaktfläche (16) hat, und dass das Kontaktteil (12, 13) derart angeordnet ist, daß der Erosionsdraht (3) durch das Kontaktteil (12, 13) nicht oder nur derart geringfügig ausgelenkt wird, daß die durch die geringfügige Auslenkung bewirkte Kontaktdruckkraft niedriger ist, als die durch die Magnetfelderzeugungsvorrichtung (14,15) erzeugbare Kontaktdruckkraft.

## Revendications

1. Dispositif d'alimentation en courant pour une machine d'électroérosion pour la transmission d'un courant d'érosion au moyen d'au moins un élément de contact (12, 13) à un fil d'érosion (3) en mouvement continu, avec un dispositif de pression de contact pour exercer une pression sur le fil d'érosion (3) contre l'élément de contact (12, 13), caractérisé en ce que le dispositif de pression de contact est composé d'un dispositif (14, 15) de génération d'un champ magnétique disposé d'une telle manière que le champ magnétique soit généré perpendiculairement au fil d'érosion (3) et que la force résultant du courant et du champ magnétique appuie le fil d'érosion contre l'élément de contact.

2. Dispositif d'alimentation en courant selon la revendication 1, caractérisé en ce que le dispositif (14, 15) générateur du champ magnétique est réalisé de manière que les dimensions du champ magnétique qu'il génère dans la direction du fil d'érosion (3), correspondent essentiellement à la longueur du fil d'érosion (3) au niveau de l'élément de contact (12, 13).

3. Dispositif d'alimentation en courant selon l'une des revendications 1 à 2, caractérisé en ce que le dispositif (14, 15) de génération du champ magnétique est réalisé de telle manière que les dimensions du champ magnétique généré dans une direction perpendiculaire à la direction de l'élément de contact (12, 13) correspondent à une ou plusieurs épaisseurs du fil d'érosion.

4. Dispositif d'alimentation en courant selon l'une des revendications 1 à 3, caractérisé en ce que le dispositif de génération d'un champ magnétique (14, 15) est constitué par un aimant permanent.

5. Dispositif d'alimentation en courant selon la revendication 4, caractérisé en ce que l'aimant permanent (14, 15) présente deux surfaces polaires (17, 18) qui s'étendent dans la direction du fil d'érosion (3) et sont situés par rapport au fil (3) et à l'élément de contact (12, 13) à une distance qui est petite en comparaison à son étendue longitudinale.

6. Dispositif d'alimentation en courant selon l'une des revendications 1 à 5, caractérisé en ce que l'élément de contact (12, 13) comporte une surface de contact (16) qui est essentiellement plate, et en ce que l'élément de contact (12, 13) est disposé d'une telle manière que le fil d'érosion (3) ne subisse aucune déviation à cause de l'élément de contact (12, 13) ou que cette déviation soit tellement petite que la force de pression de contact créée par la petite déviation soit inférieure à la force de pression de contact susceptible d'être générée par le dispositif (14, 15) de génération du champ magnétique.

## Claims

1. Current supply apparatus for an electroerosion machine for transferring an erosion current, by means of at least one contact part (12, 13), to an erosion wire (3) which runs through, having a contact pressure apparatus for pressing the erosion wire (3) against the contact part (12, 13), characterized in that the contact pressure apparatus is formed by a magnetic field generation apparatus (14, 15) which is arranged such that the magnetic field generated extends perpendicular to the erosion wire (3) and the force resulting from the current flow and the magnetic field presses the erosion wire against the contact part.

2. Current supply apparatus according to Claim 1 or 2 [sic], characterized in that the magnetic field generation apparatus (14, 15) is constructed such that the dimension of the magnetic field generated thereby in the direction of the erosion wire (3) corresponds substantially to the bearing length of the erosion wire (3) against the contact part (12, 13).

3. Current supply apparatus according to one of Claims 1 to 3 [sic], characterized in that the magnetic field generation apparatus (14, 15) is constructed such that the dimension of the magnetic field generated thereby in a direction perpendicular to the contact part (14, 15) corresponds to one or more times the thickness of the erosion wire.

4. Current supply apparatus according to one of Claims 1 to 4 [sic], characterized in that the magnetic field generation apparatus (14, 15) is formed by a permanent magnet.

5. Current supply apparatus according to Claim 5 [sic], characterized in that the permanent magnet (14, 15) has two pole faces (17, 18) which extend in the direction of the erosion wire (3) and are spaced therefrom (3) and from the contact part (12, 13) by a spacing which is small, compared with their longitudinal extent.

6. Current supply apparatus according to one of Claims 1 to 6 [sic] , characterized in that the contact part (12, 13) has a substantially planar contact face (16), and in that the contact part (12, 13) is arranged such that the erosion wire (3) is not deflected by the contact part (12, 13) or is deflected only to such a small extent that the contact pressure force effected by the small deflection is smaller than the contact pressure force which can be generated by the magnetic field generation apparatus (14, 15).

FIG.1

FIG. 2